# EUROPEAN PATENT APPLICATION

(11) **EP 3 842 217 A1**
(43) Date of publication of application: **30.06.2021**
(21) Application number: 18931187.1
(22) Date of filing: 24.08.2018
(51) Int. Cl.: B29C 64/386, B29C 64/153, B33Y 50/00

(54) **INFORMATION PROCESSING DEVICE, INFORMATION PROCESSING METHOD, INFORMATION PROCESSING PROGRAM, LAYERED-MOLDING DEVICE, AND PROCESS WINDOW GENERATION METHOD**

(71) Applicant: Technology Research Association For Future Additive Manufacturing, Chuo-ku, Tokyo 103-0027 (JP)
(72) Inventor: AOYAGI Kenta, Sendai-shi, Miyagi 980-8577 (JP); CHIBA Akihiko, Sendai-shi, Miyagi 980-8577 (JP)
(74) Representative: TBK
(86) International application number: PCT/JP2018/031389
(87) International publication number: WO 2020/039581

(57) **Abstract**

A general-purpose process window is constructed while saving cost and time. A process window generation method comprises performing laminating and shaping of samples using sets of at least two parameters for controlling laminating and shaping, which are scattered in a process window, determining, in a process map generated by mapping evaluation results obtained by evaluating the laminated and shaped samples, a boundary of the evaluation results by machine learning; and repeating the performing laminating and shaping and the determining while using a boundary region including the determined boundary as a new process window, and generating a process window separated by a finally determined boundary as a process window that guarantees quality of laminating and shaping.

## Description

### TECHNICAL FIELD

The present invention relates to a process window generation technique in laminating and shaping.

### BACKGROUND ART

In the above technical field, non-patent literatures 1 and 2 disclose a technique of obtaining optimum conditions of laminating and shaping in the following way. For example, the surface morphology of objects shaped under various conditions is observed, and the objects are classified into three states, that is, a state in which the surface is relatively flat, but unmolten powder remains (porous), a state in which powder is completely molten, and the surface is flat (even), and a state in which unevenness on the surface is large (uneven). Next, boundaries are set between the surface states, thereby defining the condition range of the even state as a process window. Also, the density of each shaped object is measured using a method such as the Archimedes method, X-ray CT, or quantitative evaluation of defects by analysis of a cross-sectional tissue observation image of the shaped object, and a condition for the highest density is obtained as an optimum condition.

### CITATION LIST

### NON-PATENT LITERATURE

Non-patent literature 1: H.E. Helmer, C. Komer, and R.F. Singer: "Additive manufacturing of nickel-based superalloy Inconel 718 by selective electron beam melting: Processing window and microstructure ", Journal of Materials Research, Vol. 29, No. 17 (2014), p. 1987-1996.
Non-patent literature 2: W.J. Sames, F.A. List, S. Pannala, R.R. Dehoff and S.S. Babu: "The metallurgy and processing science of metal additive manufacturing", International Materials Reviews, Vol. 61, No. 5 (2016), p.315-360.
Non-patent literature 3: Christopher J.C. Burges "A Tutorial on Support Vector Machines for Pattern Recognition", Data Mining and Knowledge Discovery, 2, 121-167(1998), Kluwer Academic Publishers, Boston. Manufactured in The Netherlands.

### SUMMARY OF THE INVENTION

### TECHNICAL PROBLEM

However, in the technique described in the above literatures, since the number of types of parameters (a heat source output, a scan speed, a scan line interval, a scan line length, a powder layer thickness, a shaping temperature, and the like) to be changed in shaping is large, and the ranges to vary are wide (for example, in a case of a commercially available 3-kW electron beam laminating and shaping apparatus, it is possible to vary the current within the range of 0 to 50 mA and the scan speed within the range of 0 to 8,000 m/s), it is necessary to perform evaluation by manufacturing many shaped objects to obtain the optimum condition even when experimental design is used. For this reason, to construct a process window, an enormous cost and time are needed, and different process windows are constructed depending on individuals who conduct experiments.

The present invention enables to provide a technique of solving the above-described problem.

### SOLUTION TO PROBLEM

One example aspect of the present invention provides an information processing apparatus comprising:
a parameter generator that generates sets of at least two parameters for controlling laminating and shaping such that the sets are scattered in a process window;
a sample shaping instructor that instructs a laminating and shaping unit to perform laminating and shaping of samples using the scattered sets of the at least two parameters;
a sample quality evaluator that acquires an image of the laminated and shaped samples and evaluates qualities of the laminated and shaped samples;
a boundary determiner that determines, in a process map generated by mapping evaluation results of the samples, a boundary of the evaluation results by machine learning; and
a process window generator that repeats parameter generation processing by the parameter generator, sample shaping instruction processing by the sample shaping instructor, quality evaluation processing by the sample quality evaluator, and boundary determination processing by the boundary determiner using a boundary zoon including the determined boundary as a new process window, and generates a process window separated by a finally determined boundary as a process window that guarantees quality of laminating and shaping.

Another example aspect of the present invention provides a laminating and shaping apparatus comprising:
the above-described information processing apparatus;
a laminating and shaping unit that, before shaping of a laminating and shaping target object, laminates and shapes samples based on a laminating and shaping instruction of the samples by the sample shaping instructor, and then laminates and shapes a laminating and shaping target object based on a laminating and shaping instruction of the laminating and shaping target object by the laminating and shaping instructor; and
an image acquirer that acquires images of the laminated and shaped samples.

Still other example aspect of the present invention provides an information processing method comprising:
generating sets of at least two parameters for controlling laminating and shaping such that the sets are scattered in a process window;
instructing a laminating and shaping unit to perform laminating and shaping of samples using the scattered sets of the at least two parameters;
acquiring images of the laminated and shaped samples and evaluating qualities of the samples;
determining, in a process map generated by mapping evaluation results of the samples, a boundary of the evaluation results by machine learning; and
repeating the generating, the instructing, the acquiring and evaluating, and the determining while using a boundary zoon including the determined boundary as a new process window, and generating a process window separated by a finally determined boundary as a process window that guarantees quality of laminating and shaping.

Still other example aspect of the present invention provides an information processing program for causing a computer to execute a method comprising:
generating sets of at least two parameters for controlling laminating and shaping such that the sets are scattered in a process window;
instructing a laminating and shaping unit to perform laminating and shaping of samples using the scattered sets of the at least two parameters;
acquiring images of the laminated and shaped samples and evaluating qualities of the samples;
determining, in a process map generated by mapping evaluation results of the samples, a boundary of the evaluation results by machine learning; and
repeating the generating, the instructing, the acquiring and evaluating, and the determining while using a boundary region including the determined boundary as a new process window, and generating a process window separated by a finally determined boundary as a process window that guarantees quality of laminating and shaping.

Still other example aspect of the present invention provides a process window generation method comprising:
performing laminating and shaping of samples using sets of at least two parameters for controlling laminating and shaping, which are scattered in a process window;
determining, in a process map generated by mapping evaluation results obtained by evaluating the laminated and shaped samples, a boundary of the evaluation results by machine learning; and
repeating the performing laminating and shaping and the determining while using a boundary region including the determined boundary as a new process window, and generating a process window separated by a finally determined boundary as a process window that guarantees quality of laminating and shaping.

### ADVANTAGEOUS EFFECTS OF INVENTION

According to the present invention, it is possible to construct a general-purpose process window while saving cost and time.

### BRIEF DESCRIPTION OF DRAWINGS

Fig. 1 is a block diagram showing the arrangement of an information processing apparatus according to the first example embodiment of the present invention;
Fig. 2 is a view showing the outline of processing by a laminating and shaping system including an information processing apparatus according to the second example embodiment of the present invention;
Fig. 3 is a flowchart showing a process window generation method in the laminating and shaping system including the information processing apparatus according to the second example embodiment of the present invention;
Fig. 4A is a block diagram showing the arrangement of the laminating and shaping system including the information processing apparatus according to the second example embodiment of the present invention;
Fig. 4B is a view showing the arrangement of a laminating and shaping unit according to the second example embodiment of the present invention;
Fig. 5 is a block diagram showing the functional arrangement of the information processing apparatus according to the second example embodiment of the present invention;
Fig. 6 is a view for explaining a process window according to the second example embodiment of the present invention;
Fig. 7A is a view showing the arrangement of a sample quality evaluation table according to the second example embodiment of the present invention;
Fig. 7B is a view for explaining a sample quality evaluation method according to the second example embodiment of the present invention;
Fig. 8A is a view for explaining a process map according to the second example embodiment of the present invention;
Fig. 8B is a view for explaining another process map according to the second example embodiment of the present invention;
Fig. 9A is a view for explaining machine learning according to the second example embodiment of the present invention;
Fig. 9B is a view for explaining machine learning according to the second example embodiment of the present invention;
Fig. 10 is a view showing an example of presentation of a process window according to the second example embodiment of the present invention;
Fig. 11 is a block diagram showing the hardware arrangement of the information processing apparatus according to the second example embodiment of the present invention;
Fig. 12 is a flowchart showing the processing procedure of the information processing apparatus according to the second example embodiment of the present invention;
Fig. 13 is a view showing process conditions according to an example of the present invention;
Fig. 14 is a view showing a sample image according to the example of the present invention;
Fig. 15A is a view showing a process map according to the example of the present invention;
Fig. 15B is a view showing a machine learning result according to the example of the present invention;
Fig. 16 is a view showing a sample shaped under optimum conditions according to the example of the present invention;
Fig. 17 is a block diagram showing the arrangement of a laminating and shaping system including an information processing apparatus according to the third example embodiment of the present invention;
Fig. 18 is a view showing the arrangement of a sample quality evaluation table according to the third example embodiment of the present invention;
Fig. 19 is a block diagram showing the functional arrangement of an information processing apparatus according to the fourth example embodiment of the present invention; and
Fig. 20 is a block diagram showing the functional arrangement of an information processing apparatus according to the fifth example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

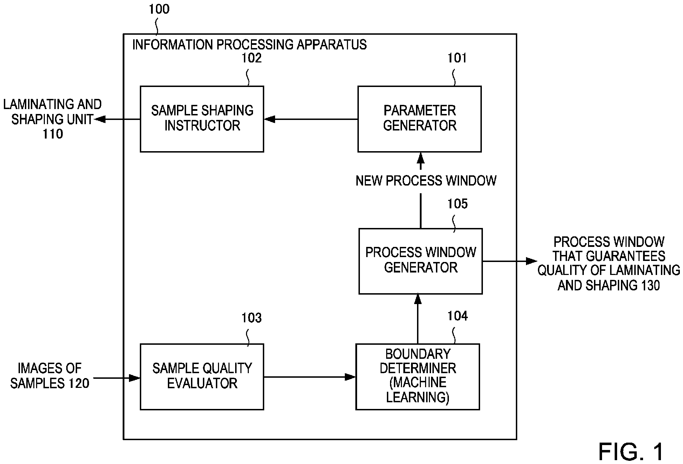

An information processing apparatus 100 according to the first example embodiment of the present invention will be described with reference to Fig. 1. The information processing apparatus 100 is an apparatus configured to generate a process window that guarantees the quality of laminating and shaping.

As shown in Fig. 1, the information processing apparatus 100 includes a parameter generator 101, a sample shaping instructor 102, a sample quality evaluator 103, a boundary determiner 104, and a process window generator 105. The parameter generator 101 generates sets of at least two parameters for controlling laminating and shaping such that the sets are scattered in a process window. The sample shaping instructor 102 instructs the laminating and shaping unit 110 to laminate and shape a sample using the scattered sets of the at least two parameters. The sample quality evaluator 103 acquires an image 120 of the laminated and shaped sample and evaluates the quality of the sample. The boundary determiner 104 determines, in a process map generated by mapping the evaluation result of the sample, the boundary of the evaluation result by machine learning. Using a boundary region including the determined boundary as a new process window, the process window generator 105 repeats parameter generation processing by the parameter generator 101, sample shaping instruction processing by the sample shaping instructor 102, quality evaluation processing by the sample quality evaluator 103, and boundary determination processing by the boundary determiner 104, and generates a process window separated by a finally determined boundary as a process window that guarantees the quality of laminating and shaping.

According to this example embodiment, since the process window that guarantees the quality of laminating and shaping is generated by automatically repeating parameter generation processing, sample shaping instruction processing, quality evaluation processing, and boundary determination processing, it is possible to construct a general-purpose process window while saving cost and time.

### [Second Example Embodiment]

An information processing apparatus according to the second example embodiment of the present invention will be described next. The information processing apparatus according to this example embodiment shapes a sample by setting parameter sets scattered in a process window, and evaluates the quality of the shaped sample. The process window is updated from the initial process window while obtaining a boundary (decision function) by machine learning from the evaluation result, and a process window that guarantees the quality of laminating and shaping is generated and presented to a user.

### <<Laminating and Shaping System Including Information Processing Apparatus>>

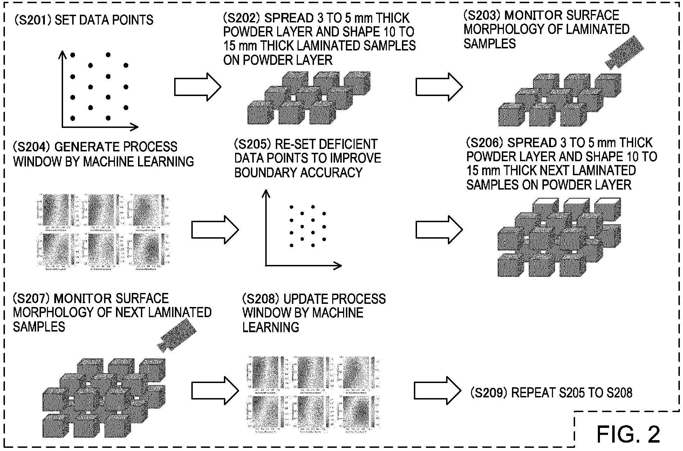

The arrangement and operation of a laminating and shaping system including the information processing apparatus according to this example embodiment will be described below with reference to Figs. 2 to 4B.

### (Processing Outline)

Fig. 2 is a view showing the outline of processing by a system including the information processing apparatus according to this example embodiment.

An example in which this processing is performed as parameter adjustment (calibration) before shaping of a laminating and shaping target object will be described. However, the present invention is not limited to this. Note that the heights of a powder layer and a shaped object and the number of shaped objects in Fig. 2 are not limited those in Fig. 2.

In this example embodiment, an automatic process map construction method is provided. Note that in "surface morphology monitoring" to be described later, unevenness on surfaces is observed, and the surfaces are mainly classified into non-flat surfaces (surfaces on which unmolten powder is observed or surfaces with large unevenness) and flat surfaces.

(Step S201): In the initial process window, ranges to vary process parameters (a beam output, a beam diameter, a scan speed, a line offset (scan line interval), a scan path length, a powder layer thickness, and the like) are determined, and data points (parameter sets) are set such that they are evenly distributed in the initial process window. Note that to always shape a high-quality sample and a low-quality sample, a process window including a range from the maximum value to the minimum value of each parameter settable by the laminating and shaping unit is used as the initial process window.

(Step S202): A powder layer (about 3 to 5 mm) is formed on the base plate of the laminating and shaping unit, and shaping (the height of a shaped object: about 10 to 15 mm) is performed on the powder layer under the set conditions. Note that in one sample laminating and shaping, a predetermined number of samples are laminated and shaped in the laminating and shaping unit using sets of different parameters. Fig. 2 shows nine samples, but the number is not limited to this.

(Step S203): The surface morphology of the laminated and shaped samples is monitored, and the surfaces are classified into flat surfaces and non-flat surfaces. If there is no flat surface, the surfaces are further classified into surfaces on which unmolten powder remains because of energy shortage and surfaces with large surface unevenness because of excessive energy. Alternatively, even if a flat surface exists, non-flat surfaces are classified into surfaces on which unmolten powder remains because of energy shortage and surfaces with large surface unevenness because of excessive energy. That is, an instruction is issued such that each laminated and shaped sample is captured by an image capturer, and the quality of the sample is evaluated based on the image of the sample captured by the image capturer, and evaluation value is assigned.

(Step S204): A process window is generated based on the qualities of the samples by machine learning. A boundary between the flat surfaces and the non-flat surfaces is obtained by the machine learning.

(Step S205): A new process window including the obtained boundary zoon is generated, and deficient data points are re-set to increase the accuracy of the boundary. At this time, the data points are set in a process window including the vicinity of the classification boundary (near a point where the decision function is "0"), thereby increasing the accuracy of the boundary.

(Step S206): During execution of steps S204 and S205, a powder layer (3 to 5 mm) is formed on the shaped samples, and then shaping (the height of new shaped samples: about 10 to 15 mm) is performed on the powder layer under the re-set conditions. That is, a powder layer generation instructor instructs generation of a predetermined powder layer that is not to be shaped before laminating and shaping the next samples.

(Step S207): The surface morphology of the next examined and shaped samples is monitored again, and the surfaces are classified again into flat surfaces and non-flat surfaces. If there is no flat surface, the surfaces are further classified into surfaces on which unmolten powder remains because of energy shortage and surfaces with large surface unevenness because of excessive energy. Alternatively, even if a flat surface exists, non-flat surfaces are classified into surfaces on which unmolten powder remains because of energy shortage and surfaces with large surface unevenness because of excessive energy.

(Step S208): A new boundary is obtained by machine learning, and the process window is updated to a new process window.

(Step S209): Steps S205 to S208 are repeated. Note that if process window does not change anymore, or if the height from the base plate to the uppermost surface of the samples exceeds a value set in advance (a maximum shaping height possible in the apparatus), the processing is ended. That is, the repeat is ended if the new boundary cannot be determined anymore, or if the repeat has been done a predetermined number of times (cycles). Note that the procedure is not limited to that shown in Fig. 2, and, for example, the procedure of step S206 may be executed in parallel to steps S203 to S205.

### (System Procedure)

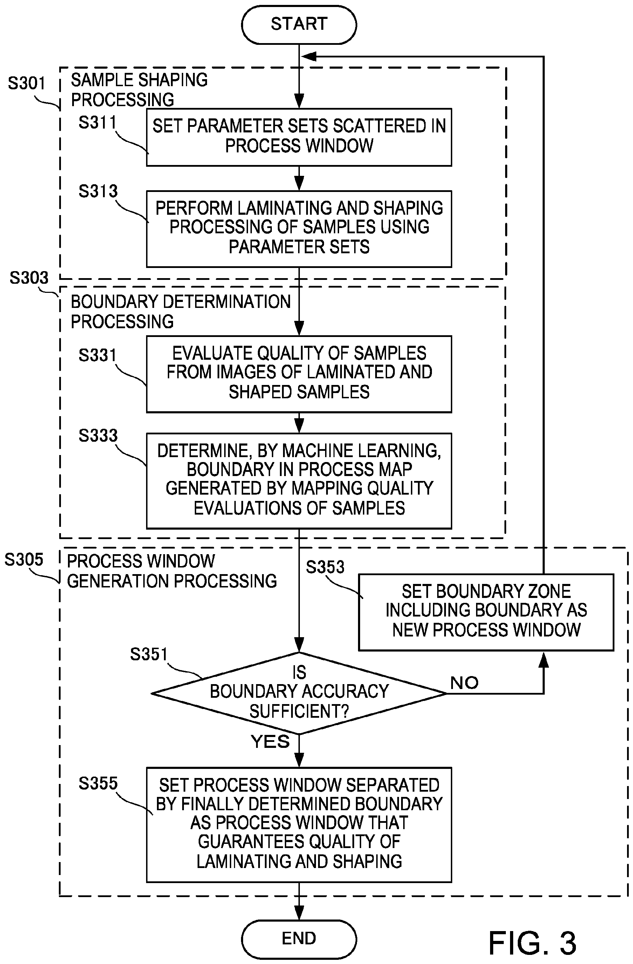

Fig. 3 is a flowchart showing a process window generation method in the laminating and shaping system including the information processing apparatus according to this example embodiment. Note that in Fig. 3, the process of step S206 in Fig. 2 is omitted.

The process window generation method in the laminating and shaping system includes sample shaping processing (step S301), boundary determination processing (step S303), and process window generation processing (step S305).

Sample shaping processing (step S301) corresponds to steps S201 and S202 in Fig. 2, in which laminating and shaping of samples are performed using sets of at least two parameters for controlling laminating and shaping, which are scattered in the process window. Sample shaping processing (step S301) includes step S311 of setting parameter sets scattered in the process window, and step S313 that is laminating and shaping processing of samples using the parameter sets.

Boundary determination processing (step S303) corresponds to steps S203 and S204 in Fig. 2, in which in a process map generated by mapping evaluation results obtained by evaluating the quality of laminated and shaped samples, the boundary of the evaluation results is determined by machine learning. Boundary determination processing (step S303) includes step S331 of evaluating the quality of samples from the images of the laminated and shaped samples, and step S333 of deciding, by machine learning, the boundary in the process map generated by mapping quality evaluations of the samples.

Process window generation processing (step S305) corresponds to steps S205 to S209 in Fig. 2, in which the sample shaping step and the boundary determination step are repeated using a boundary zoon including a determined boundary as a new process window, and a process window separated by a finally determined boundary is generated as a process window that guarantees the quality of laminating and shaping. Process window generation processing (step S305) includes step S351 of determining whether the boundary accuracy is sufficient, step S353 of, if the boundary accuracy is not sufficient, setting a boundary region including a boundary to a new process window, and step S355 of, based on an end condition that, for example, the boundary accuracy is sufficient, setting a process window separated by a finally determined boundary as a process window that guarantees the quality of laminating and shaping.

### (System Arrangement)

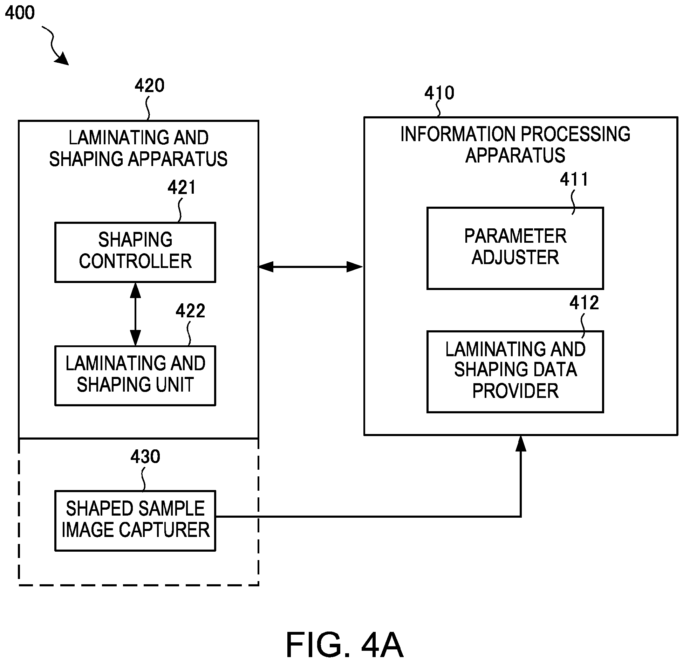

Fig. 4A is a block diagram showing the arrangement of a laminating and shaping system 400 including an information processing apparatus 410 according to this example embodiment.

The laminating and shaping system 400 includes the information processing apparatus 410 according to this example embodiment, a laminating and shaping apparatus 420, and a shaped sample image capturer 430. Note that the shaped sample image capturer 430 may be either incorporated in the laminating and shaping apparatus 420 or installed separately.

The information processing apparatus 410 includes a parameter adjuster 411 according to this example embodiment, which is configured to calibrate (adjust) parameters while shaping a sample by a laminating and shaping unit 422, and a laminating and shaping data provider 412 configured to shape a laminating and shaping target object by the laminating and shaping unit 422.

The laminating and shaping apparatus 420 includes a shaping controller 421 that controls the laminating and shaping unit 422 to shape a sample or a laminating and shaping target object in accordance with an instruction from the information processing apparatus 410, and the laminating and shaping unit 422 that shapes a sample or a laminating and shaping target object under the control of the shaping controller 421.

The shaped sample image capturer 430 captures the surface of a shaped sample. Note that the shaped sample image capturer 430 may be, for example, an X-ray camera capable of capturing an internal structure without processing such as cutting of a shaped sample.

### (Laminating and Shaping Unit)

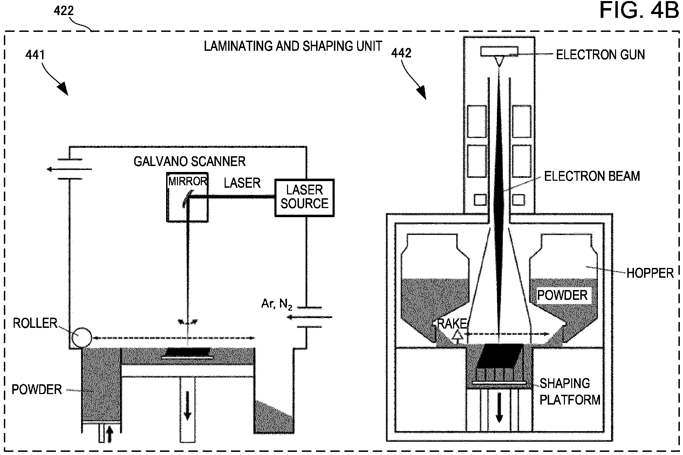

Fig. 4B is a view showing the arrangement of the laminating and shaping unit 422 according to this example embodiment. Fig. 4B shows a metal laminating and shaping unit that performs laminating and shaping using metal powder. As a shaping method, an example of a powder bed method is shown. However, a powder deposition method (not shown) may also be used.

A laminating and shaping unit 441 shown in Fig. 4B is a laminating and shaping unit of a powder bed method using a laser melting method, and is called SLM (Selective Laser Melting). On the other hand, a laminating and shaping unit 442 shown in Fig. 4B is a laminating and shaping unit of a powder bed method using an electron beam melting method, and is called EBM (Electron Beam Melting). In this example embodiment, a description will be made using an example of electron beam melting (EBM). An application to selective laser melting (SLM) is also possible, and the same effect can be obtained. Note that the arrangements of the laminating and shaping units 441 and 442 shown in Fig. 4B are merely examples, and the arrangements are not limited to these. For example, powder supply of the laminating and shaping unit 442 may have an arrangement like the laminating and shaping unit 441.

### «Functional Arrangement of Information Processing Apparatus»

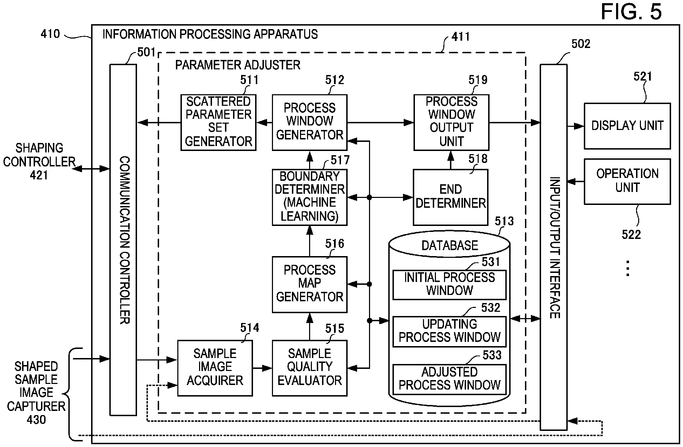

Fig. 5 is a block diagram showing the functional arrangement of the information processing apparatus 410 according to this example embodiment. Note that the laminating and shaping data provider 412 is not illustrated in Fig. 5.

The information processing apparatus 410 includes a communication controller 501, an input/output interface 502, a display unit 521, an operation unit 522, and the parameter adjuster 411 shown in Fig. 4A. Note that in fact, the data of a shaped object that is a sample according to this example embodiment is sent from the laminating and shaping data provider 412 to the shaping controller 421. In Fig. 5, the laminating and shaping data provider 412 is not illustrated to avoid cumbersomeness.

The communication controller 501 controls communication between the shaping controller 421 of the laminating and shaping apparatus 420 and the shaped sample image capturer 430. Note that the communication controller 501 may control communication with another external apparatus. The shaped sample image capturer 430 may be connected to the input/output interface 502 without interposing the communication controller 501.

The input/output interface 502 interfaces with input/output devices such as the display unit 521 and the operation unit 522. As described above, the shaped sample image capturer 430 may be connected.

The parameter adjuster 411 includes a scattered parameter set generator 511, a process window generator 512, and a database 513. The parameter adjuster 411 also includes a sample image acquirer 514, a sample quality evaluator 515, a process map generator 516, and a boundary determiner (machine learning) 517. The parameter adjuster 411 further includes an end determiner 518, and a process window output unit 519.

The scattered parameter set generator 511 generates scattered parameter sets in a process window generated by the process window generator 512 such that a boundary can be determined from the evaluation results of samples. The process window generator 512 initially uses an initial process window 531 held in the database 513, and in subsequent repeat, generates a region including a boundary determined by the boundary determiner 517 as a new process window. The database 513 holds the initial process window 531, an updating process window 532, and an adjusted process window 533. Note that although a detailed description thereof will be omitted, the database 513 also holds data to be used by the functional components of the parameter adjuster 411.

The sample image acquirer 514 acquires an image of a shaped sample captured by the shaped sample image capturer 430 via the communication controller 501 or the input/output interface 502. The sample quality evaluator 515 evaluates the quality of a sample, using a sample quality evaluation table 710 to be described later, based on the image of the shaped sample acquired by the sample image acquirer 514. For example, a sample shaping size, jags around a sample, unevenness on a sample surface, powder remaining on a sample surface, and the like are used as the criteria of evaluation. Note that the sample quality evaluator 515 includes an image capturing instructor that instructs to capture a laminated and shaped sample by an image capturer, and an evaluation value assigner that evaluates the quality of a sample based on the image of the sample captured by the image capturer, and assigns an evaluation value. The process map generator 516 generates a process map by mapping the evaluation results of the sample quality evaluator 515 in a process window. The boundary determiner (machine learning) 517 obtains the decision function of the evaluation result using machine learning from the process map generated by the process map generator 516 and determines a boundary. Note that in this example embodiment, a support vector machine is used as machine learning. However, a boundary may be determined by logistic regression, a k-nearest neighbor algorithm, a decision tree, random forest, a neural network, or naive bayes definition, and the same effect can be obtained.

The end determiner 518 determines the end of repeat of sample shaping → observation → evaluation → process window construction. The determination criteria include a condition that a process window does not change anymore and a condition that the height from the base plate to the uppermost surface exceeds a value set in advance (a maximum shaping height possible in the apparatus). That is, the repeat is ended if the boundary cannot be determined anymore, or if the repeat has been done a predetermined number of times. If the end determiner 518 determines to end the repeat, the process window output unit 519 functions as a presenter that presents a currently generated process window on the display unit 521 and supports parameter setting by the user. Note that the support can be made either by directly presenting the currently generated process window or by presenting the process window such that parameters can be set within a range in the process window where quality can be guaranteed.

### (Process Window)

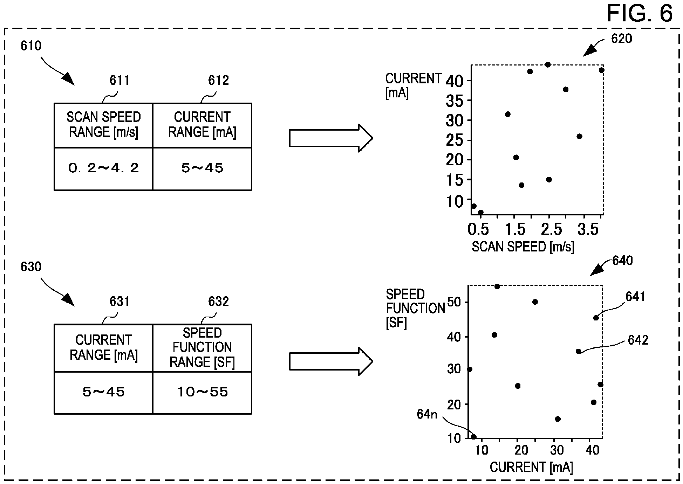

Fig. 6 is a view for explaining process windows 620 and 640 according to this example embodiment.

A process window set value 610 shown in Fig. 6 is a value used to generate the process window 620. As the process window set value 610, a scan speed range 611 and a current range 612 are set.

A process window set value 630 shown in Fig. 6 is another value used to generate the process window 640. As the process window set value 630, a current range 631 and a speed function range 632 are set. Note that the Speed Function (SF) is known as the relationship between a scan speed and a current value, and used as one of parameters serving as the axes of a process map as the index of a scan speed. In this example embodiment, the process window 640 is used, and parameter sets 641 to 64n are generated to obtain evaluation results of sample quality across a boundary. Here, the current (current value) is a current value supplied to a heat source corresponding to a heat source output such as a laser beam or an electron beam. Note that generation of the parameter sets 641 to 64n is not limited to that shown in Fig. 6 if it is possible to obtain evaluation results of sample quality across a boundary.

Note that Fig. 6 shows the two-dimensional process windows 620 and 640 each including two parameters because of a limitation on the drawing. However, an n-dimensional process window including other parameters such as a scan line interval, a scan line length, a powder layer thickness, a shaping temperature, and a beam diameter may be used. A fixed parameter that does not change or cannot be changed in the repeat of sample shaping → observation → evaluation → process window construction may be excluded from the dimensions of the process window. It is preferable to select parameters appropriate for obtaining a boundary in a process window from the n-dimensional parameters.

### (Sample Quality Evaluation Table)

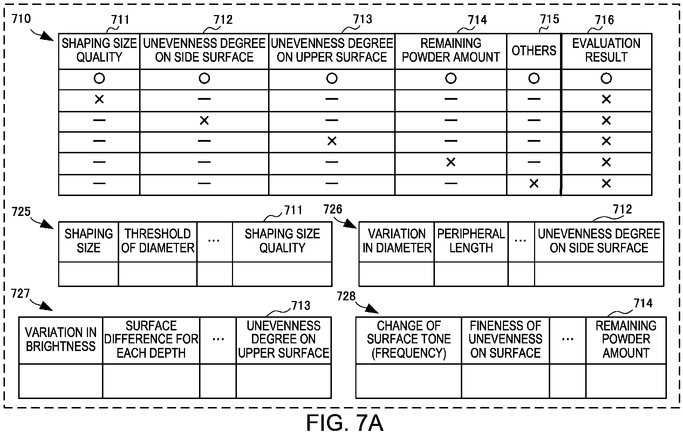

Fig. 7A is a view showing the arrangement of the sample quality evaluation table 710 according to this example embodiment. The sample quality evaluation table 710 is used by the sample quality evaluator 515 to evaluate the quality of a sample from the image of the sample. Evaluation index tables 721 to 724 are tables showing evaluation examples of evaluation indices in the sample quality evaluation table 710.

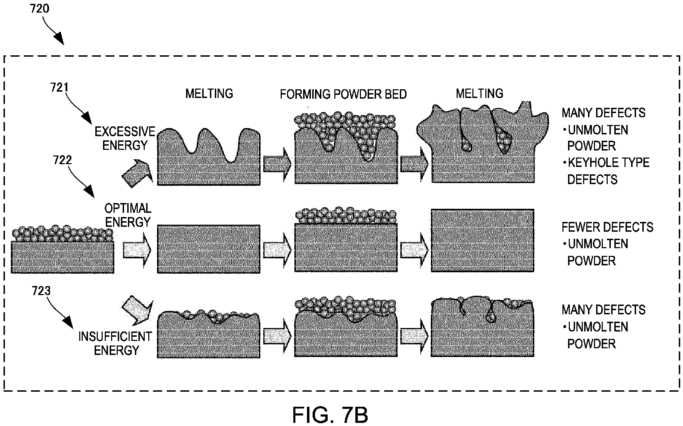

A sample quality evaluation method 720 according to this example embodiment will be described first with reference to Fig. 7B.

In excessive energy 721 shown in Fig. 7B, a powder layer is molten deep, and unevenness is formed on the surface. Next powder enters concave portions. As a result, unmolten powder remains in the shaped object, and a fine shape cannot be formed, resulting in unevenness on the surface. When a laser melting method is used, keyhole type defects in which bubbles remain are generated.

In insufficient energy 723 shown in Fig. 7B, unmolten powder remains on the surface of a powder layer, and next powder is laminated on that. As a result, melting is imperfect, resulting in unevenness on the surface.

Optimal energy 722 exists between the sample shape of high energy and the sample shape of low energy in which a fine shape is formed, and the surface become flat. In this example embodiment, boundary determination in a sample evaluation result is repeated.

The sample quality evaluation table 710 shown in Fig. 7A stores, as evaluation conditions, determination results of a shaping size quality 711 of sample, an unevenness degree 712 on a side surface, an unevenness degree 713 on a sample upper surface, a remaining powder amount 714 on a sample surface, and others 715, which are recognized from the image of a sample. An evaluation result 716 is stored as the general evaluation of the evaluation conditions. Note that in Fig. 7A, if at least one of the evaluation conditions has "×", the evaluation result 716 is "×". However, a weight concerning evaluation may be added to each evaluation criterion, and evaluation may be done based on the total score. Alternatively, evaluation may be simplified in the initial stage by employing only some of the evaluation conditions shown in Fig. 7A.

The evaluation index table 725 shown in Fig. 7A is a table used to determine the shaping size quality 711 of a sample from a captured image. By the evaluation index table 725, for example, a shaping size (diameter) and a diameter threshold are compared, thereby determining quality based on the deviation from a target shaping size. The evaluation index table 726 is a table used to determine the unevenness degree 712 on the side surface of a sample from a captured image. By the evaluation index table 726, it is determined, based on, for example, a variation in the shaping size (diameter), the length of the peripheral outline of a shaped object extracted from an image, and the like, whether unevenness on the side surface of a sample is large/small. The evaluation index table 727 is a table used to determine the unevenness degree 713 on the upper surface of a sample from a captured image. By the evaluation index table 727, it is determined, based on, for example, a variation in the brightness of an image, a surface difference between images having different depths (different focal points), and the like, whether unevenness on the surface of a sample is large/small. The evaluation index table 728 is a table used to determine the amount 714 of unmolten powder remaining on a sample surface from a captured image. By the evaluation index table 728, it is determined, based on, for example, a change (frequency) of the tone of a surface image, the fineness of unevenness on the surface, and the like, whether the amount of unmolten powder on the surface of a sample is large/small. Note that the determination conditions of the evaluation indices are not limited to these.

### (Process Map)

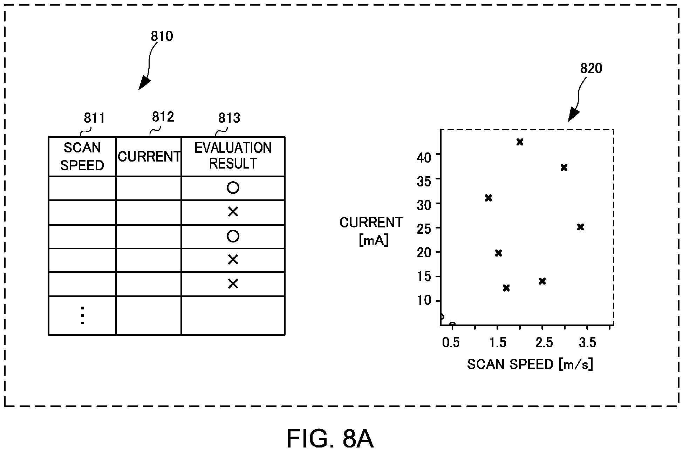

Fig. 8A is a view for explaining a process map 820 according to this example embodiment. The process map 820 is a process map generated by mapping the evaluation results of sample quality on the process window 620 shown in Fig. 6.

A table 810 of sample quality evaluation results used to generate the process map 820 is shown. For each shaped sample, the table 810 stores an evaluation result 813 in association with a scan speed 811 and a current 812, and the evaluation results 813 are mapped.

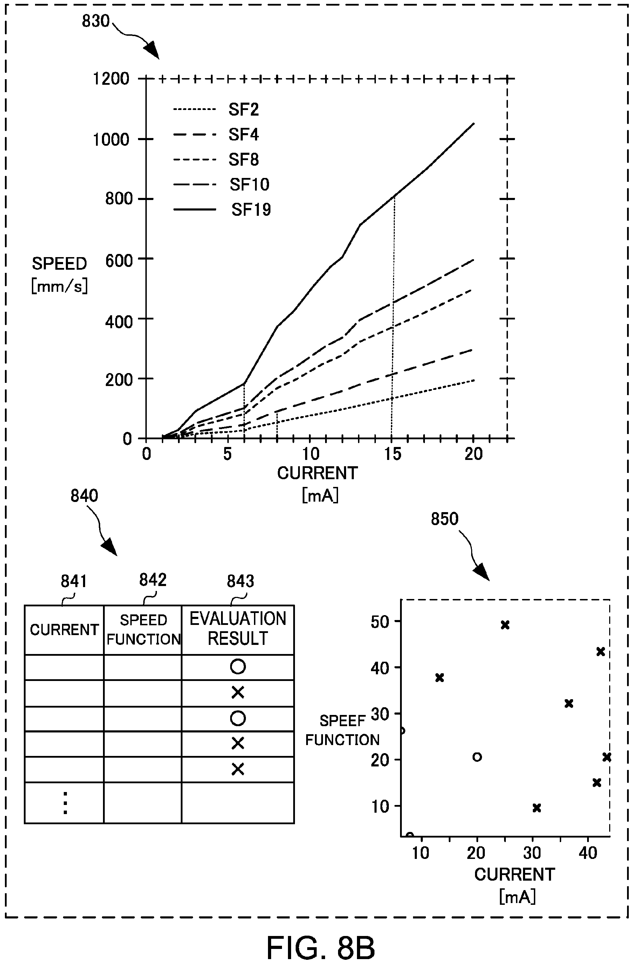

Fig. 8B is a view for explaining another process map 850 according to this example embodiment. The process map 850 is a process map generated by mapping the evaluation results of sample quality on the process window 640 shown in Fig. 6.

A table 840 of sample quality evaluation results used to generate the process map 850 is shown. For each shaped sample, the table 840 stores an evaluation result 843 in association with a current 841 and a speed function (SF) 842, and the evaluation results 843 are mapped. Fig. 8B shows the speed function (SF) 842, and a relationship 830 between a current [mA] and a speed [mm/s].

Note that in this example embodiment, machine learning is performed based on the process map 850 shown in Fig. 8B. However, the process map is not limited to the process map 850 shown in Fig. 8B.

### (Machine Learning: Support Vector Machine)

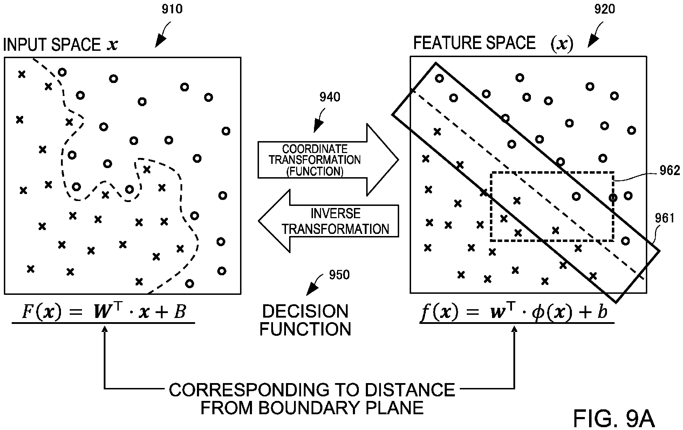

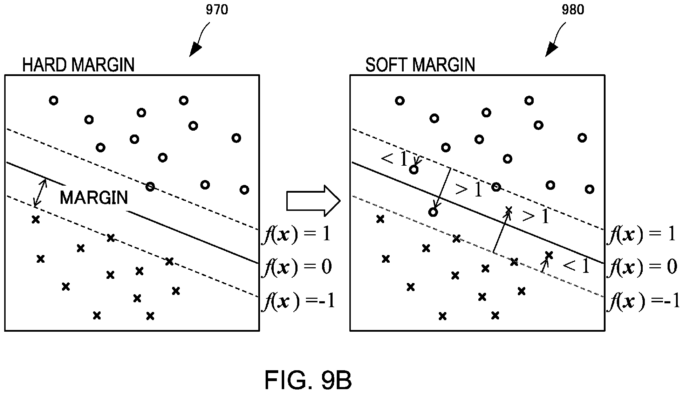

Figs. 9A and 9B are views for explaining machine learning according to this example embodiment.

Fig. 9A shows a state in which a boundary is determined by a support vector machine that is machine learning according to this example embodiment. As in an input space 910, an actual boundary is not a straight line in many cases. The input space 910 is converted into a feature space 920 in which a boundary is a straight line by coordinate transformation by a coordinate transformation function 940, thereby obtaining a boundary. A decision function 950 representing the boundary is inversely transformed, thereby showing the boundary in the input space 910. The decision function 950 representing the boundary is "0". As the distance from the decision function becomes long, laminating and shaping of stable quality can be performed even if there is an influence of external disturbance or the like.

Here, process windows 961 and 962 shown in Fig. 9A are examples of a new process window including a region including a boundary determined by the support vector machine. The process window 961 is an example of a process window including the whole boundary, and the process window 962 is an example of a process window including only a region in which the boundary should be clearer. Note that generation method of the new process window is not limited to that shown in Fig. 9A, and a suitable process window is generated such that the boundary accuracy can be increased by machine learning. Note that instead of generating a new process window, the selection region of parameter sets in the original process window may be limited to a region including the boundary.

If an evaluation result exists even in a boundary margin by the support vector machine, not a hard margin 970 but a soft margin 980 that considers the evaluation result in the boundary margin as well is employed, as shown in Fig. 9B.

Note that for more information about processing by the support vector machine, see [non-patent literature 3]. Also, in addition to the support vector machine, machine learning for deciding a boundary includes logistic regression, a k-nearest neighbor algorithm, a decision tree, random forest, a neural network, and naive bayes definition. These can also be used, and the same effect can be obtained.

### (Presentation of Process Window)

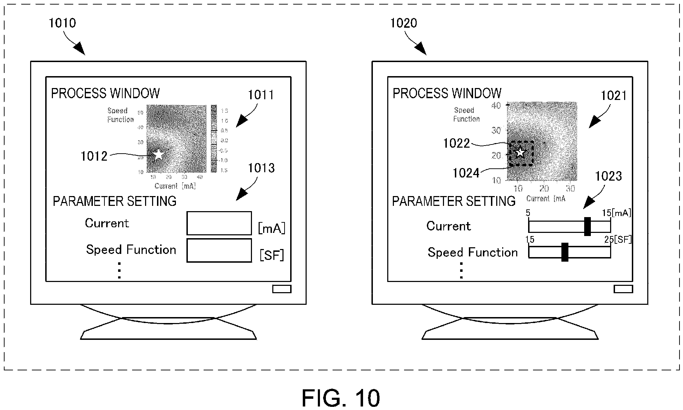

Fig. 10 is a view showing an example of presentation of a process window according to this example embodiment. On the display unit 521, information representing a process window that is generated by the process window generator and guarantees the quality of laminating and shaping is presented to the user as information for supporting setting of sets of at least two parameters by the user.

In a presentation example 1010 shown in Fig. 10, a final process window 1011, and an input region 1013 for parameters to be input by the user are displayed. The user inputs appropriate parameters while referring to the process window 1011. Here, a star 1012 indicates a position corresponding to input values in the process window 1011. In this way, the user can input parameters that are apart from the boundary line and can guarantee quality.

In a presentation example 1020 shown in Fig. 10, a final process window 1021, and setting regions 1023 and 1024 in which the user can input parameters within the ranges of appropriate parameters. The user can set appropriate parameters in the setting regions 1023 and 1024 while referring to the process window 1021. Here, a star 1022 indicates a position corresponding to set values in the process window 1021. In this way, the user can set parameters that are apart from the boundary line and can guarantee quality.

Using the input or set parameter sets, a laminating and shaping instructor instructs the shaping controller 421 of the laminating and shaping apparatus 420 to laminate and shape a laminating and shaping target object. Note that the process window presentation examples are not limited to those in Fig. 10, and a user interface that allows the user to easily and stably select suffices.

### <<Hardware Arrangement of Information Processing Apparatus>>

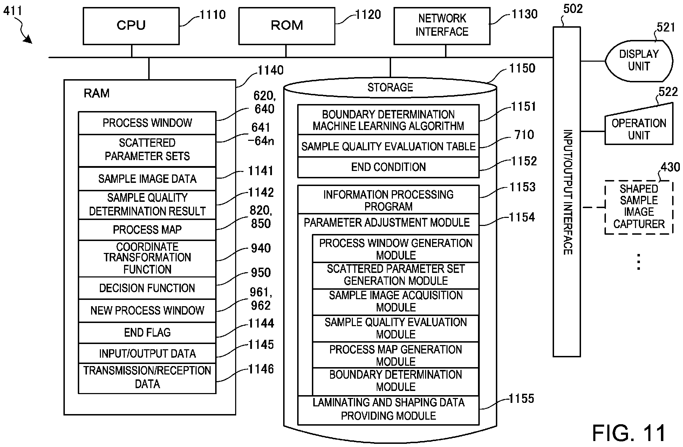

Fig. 11 is a block diagram showing the hardware arrangement of the information processing apparatus 410 according to this example embodiment.

In Fig. 11, a CPU (Central Processing Unit) 1110 is a processor for arithmetic control and executes a program, thereby implementing the functional components shown in Fig. 5. The CPU 1110 may include a single CPU or a plurality of CPUs. A ROM (Read Only Memory) 1120 stores initial data, the permanent data of programs, and the programs. A network interface 1130 controls communication with the shaping controller 421 and the shaped sample image capturer 430 via a network.

A RAM (Random Access Memory) 1140 is a random access memory used by the CPU 1110 as a work area for temporary storage. In the RAM 1140, an area to store data necessary for implementation of this example embodiment is allocated. The process windows 620 and 640 are data representing the process windows shown in Fig. 6. The scattered parameter sets 641 to 64n are data representing the parameter sets shown in Fig. 6. Image data 1141 of a sample is the data of an image of a sample captured by the shaped sample image capturer 430, and includes the feature amount of the image data. A sample quality determination result 1142 is the data of a quality determination result of a sample determined based on the image feature amount of the sample and the sample quality evaluation table 710. The process maps 820 and 850 are data representing the process maps shown in Figs. 8A and 8B. The coordinate transformation function 940 is the data of the coordinate transformation function shown in Fig. 9A. The decision function 950 is the data of the decision function representing a boundary shown in Fig. 9A. The new process windows 961 and 962 are data of the process windows shown in Fig. 9A, which are newly generated by the process window generator in consideration of the boundary. An end flag 1144 is data used to end repeat. Input/output data 1145 is data input/output to/from an input/output device connected to the input/output interface 502. Transmission/reception data 1146 is data transmitted/received to/from an external apparatus via the network interface 1130.

A storage 1150 stores databases, various kinds of parameters, and following data and programs which are necessary for implementation of this example embodiment and are used by the CPU 1110. A boundary determination machine learning algorithm 1151 is a machine learning algorithm that determines a boundary from a sample quality evaluation result of a process map. In this example embodiment, a support vector machine is used. The sample quality evaluation table 710 is a table shown in Fig. 7A, which is used to evaluate the quality of a sample from the image of the sample. An end condition 1152 stores an end condition of repeat described concerning step S209 in Fig. 2.

The storage 1150 stores the following programs. An information processing program 1153 is a program configured to control the entire information processing apparatus 410. A parameter adjustment module 1154 is a module configured to implement the parameter adjuster 411. The parameter adjustment module 1154 includes a process window generation module, a scattered parameter set generation module, a sample image acquisition module, a sample quality evaluation module, a process map generation module, and a boundary determination module in correspondence with the functional components shown in Fig. 5. The storage 1150 also holds a laminating and shaping data providing module 1155.

The display unit 521 and the operation unit 522 are connected as input/output devices to the input/output interface 502. In addition, the shaped sample image capturer 430 may be connected to the input/output interface 502.

Note that programs and data associated with general-purpose functions and other implementable functions of the information processing apparatus 410 are not shown in the RAM 1140 and the storage 1150 in Fig. 11.

### <<Processing Procedure of Information Processing Apparatus>>

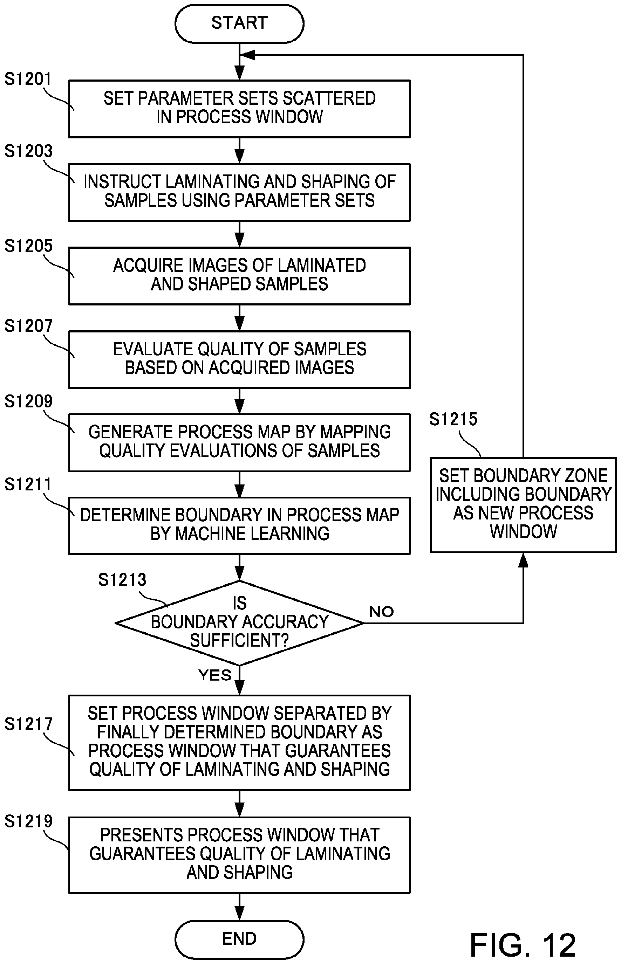

Fig. 12 is a flowchart showing the processing procedure of the information processing apparatus 410 according to this example embodiment. Note that this flowchart is executed by the CPU 1110 shown in Fig. 11 using the RAM 1140 and implements the functional components shown in Fig. 5. Powder layer generate instruction processing between sample laminating and shaping processes is not illustrated in Fig. 12.

In step S1201, the information processing apparatus 410 sets parameter sets scattered in a process window. In step S1203, the information processing apparatus 410 instructs the laminating and shaping apparatus 420 to laminate and shape samples using the parameter sets. In step S1205, the information processing apparatus 410 acquires the images of the laminated and shaped samples from the shaped sample image capturer 430. In step S1207, the information processing apparatus 410 executes quality evaluation of the samples based on the acquired images. In step S1209, the information processing apparatus 410 generates a process map by mapping the quality evaluations of the samples in the process window.

In step S1211, the information processing apparatus 410 determines a boundary in the process map by machine learning. In step S1213, as the end condition, the information processing apparatus 410 determines whether, for example, boundary accuracy is sufficient. If the end condition is not satisfied, in step S1215, the information processing apparatus 410 repeats the processing from step S1201 using a boundary zoon including the boundary as a new process window.

If the end condition is satisfied, in step S1217, the information processing apparatus 410 sets a process window separated by a finally determined boundary as a process window that guarantees the quality of laminating and shaping. In step S1219, the information processing apparatus 410 presents the process window that guarantees the quality of laminating and shaping from the display unit 521 to the user.

According to this example embodiment, since a process window that guarantees the quality of laminating and shaping is generated by automatically repeating parameter generation processing, laminating and shaping instruction processing, quality evaluation processing, and boundary determination processing, it is possible to construct a general-purpose process window while saving cost and time.

That is, in this example embodiment, the procedures of (1) forming a powder layer of a certain height, (2) shaping to a certain height, (3) observing a shaped object surface using a monitoring device implemented in the shaping apparatus, (4) classifying various shaping conditions by machine learning based on the surface morphology, and (5) deciding deficient data points and adding conditions are repeated, and the shaped object is not extracted from the apparatus for evaluation of the density or the like. Additionally, at the same time as the completion of a shaping test, process window construction and determination of process conditions under which shaping defects are less likely to occur are completed. Hence, since the processing can automatically be executed without the need of manual operations in almost all processes, cost and time needed for process window construction can largely be reduced.

### [Example]

An example executed according to the above-described example embodiment and a result thereof will be described below. Note that a cycle of process window construction will be described below for the sake of simplicity. The cycle is repeated similarly, thereby generating a process window of appropriate parameter conditions.

### (Process Conditions)

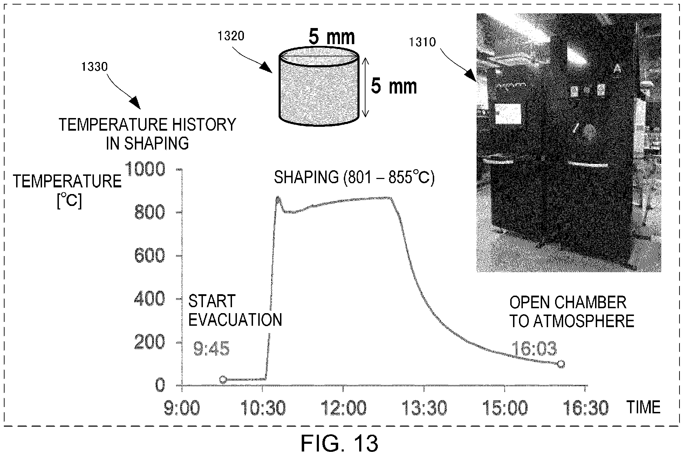

Fig. 13 is a view showing process conditions according to this example.

A sample shaped in this example is metal powder of a CoCrMo alloy (ASTM F75) for medical use. The metal powder was shaped into 11 samples of different parameter sets, each of which had a diameter of 5 mm and a height of 5 mm, by Arcam A2X1310 (available from Arcam).

The surface image of each sample was acquired, and quality determination was executed based on feature amounts, thereby generating a process map. A boundary of quality in the process map was determined using a support vector machine. A region including the determined boundary was generated as a new process window, and 11 samples were further shaped using different parameter sets.

In this way, six layers with powder layers sandwiched between them were laminated for the 11 samples, and a region (process window) of an appropriate parameter set was determined.

In this example, as indicated by a temperature history 1330 at the time of shaping, three hours were needed for sample shaping, and about seven hours were needed for overall processing. However, processing such as cutting of the shaped samples was not necessary, the series of processes were automatically performed, and only the sample shaping time by the laminating and shaping apparatus was needed in fact.

As for the sample image, the process map, and the machine learning result, a cycle of repeat will be described below, and a description of the overall procedure will be omitted.

### (Sample Image)

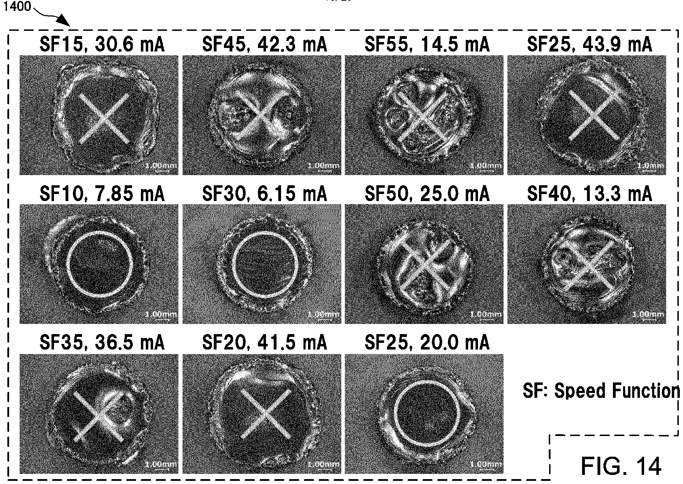

Fig. 14 is a view showing a sample image 1400 according to this example.

The sample image 1400 shows the surface images of the 11 samples simultaneously shaped in parallel. In these, a sample marked with O is a sample determined as normal, and a sample marked with × is a sample determined as defective.

For example, the first sample of a set of (SF 15, 30.6 mA) and the fourth sample of a set of (SF 25, 43.9 mA) were determined as defective because of a large shaping size (8 mm > 5 mm) and unevenness on the periphery. The cause is assumed to be high energy. The second sample of a set of (SF 45, 42.3 mA) and the third sample of a set of (SF 55, 14.5 mA) were determined as defective because of a residue of metal powder recognized on the sample surfaces. The cause is assumed to be low energy.

As described above, it can be seen that the 11 samples included both high energy and low energy, and were shaped as parameter sets capable of deciding a boundary in a process map.

### (Process Map)

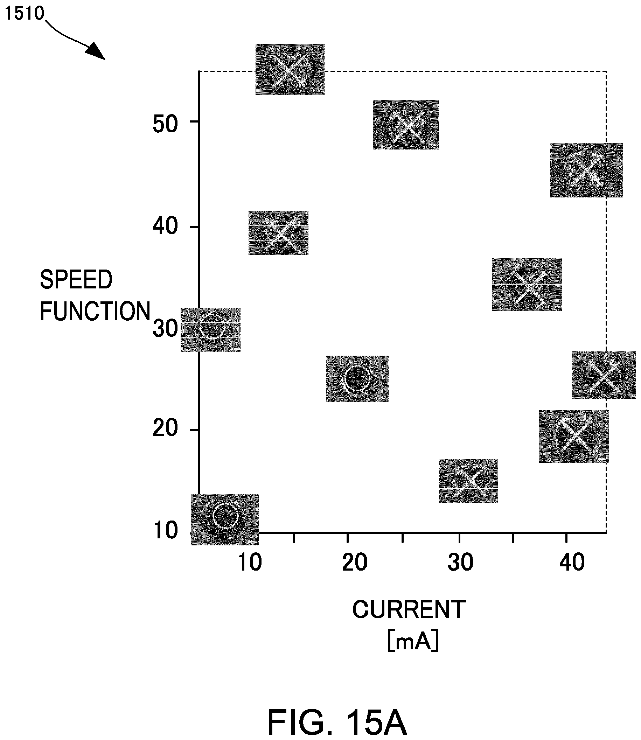

Fig. 15A is a view showing a process map 1510 according to this example.

In Fig. 15A, the evaluation results of the samples shown in Fig. 14 were mapped as images in a process window.

### (Machine Learning Result)

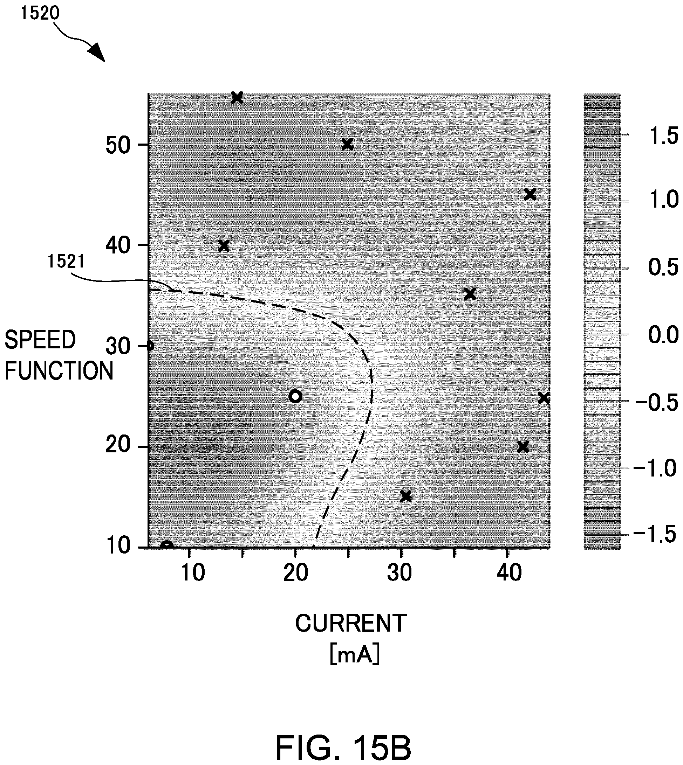

Fig. 15B is a view showing a machine learning result 1520 according to this example.

Fig. 15B shows a result obtained by assigning image positions in Fig. 15A as O(+1)/×(-1) and deciding a decision function representing a boundary using a support vector machine. In Fig. 15B, to clarify a boundary portion, it is indicated by a temporary broken line 1521.

### (Optimum Conditions)

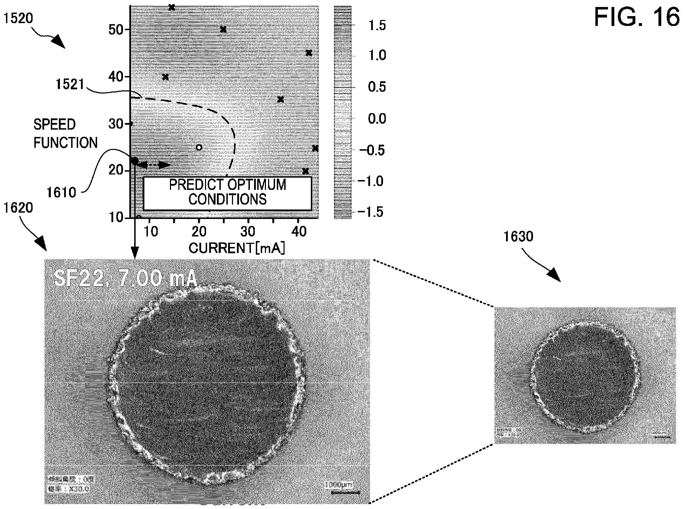

Fig. 16 is a view showing a sample 1620 (1630) shaped under optimum conditions according to this example.

In a normal are of parameter sets separated by the boundary obtained in Fig. 15B, an identical sample having a diameter of 5 mm and a height of 5 mm has been shaped under optimal condition of a parameter set (SF 22, 7.00 mA) at an optimal position 1610 apart from the boundary. Note that a double headed arrow in Fig. 16 indicates a stable appropriate parameter range without any influence of external disturbance, which is apart from the boundary by a predetermined distance or more.

As a result, the sample 1620 less distorted than the samples determined as normal in Fig. 14 was obtained. The image 1630 of the same magnification as in Fig. 14 is shown.

As described above, according to this example, it is possible to present a process window including a parameter set close to optimum conditions to the user while saving cost and time.

According to this example, since a general-purpose process window is constructed while saving cost and time, the sample could be laminated and shaped by setting parameters that were optimum conditions.

### [Third Example Embodiment]

An information processing apparatus according to the third example embodiment of the present invention will be described next. The information processing apparatus according to this example embodiment is different from the above-described second example embodiment in that a sample can be laminated and shaped while changing a variety of parameters of laminating and shaping. The rest of the components and operations is the same as in the second example embodiment. Hence, the same reference numerals denote the same components and operations, and a detailed description thereof will be omitted.

### <<Laminating and Shaping System>>

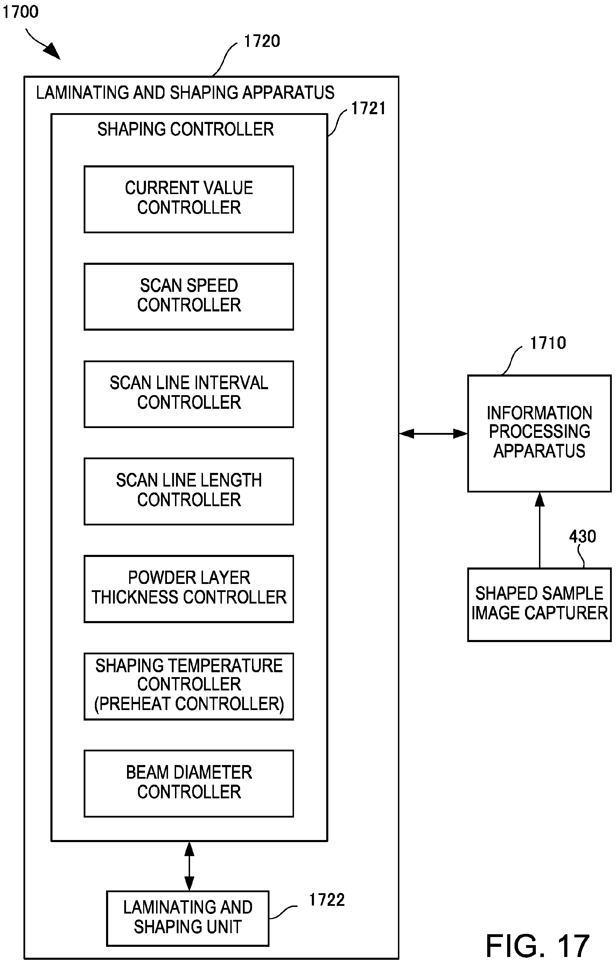

Fig. 17 is a block diagram showing the arrangement of a laminating and shaping system 1700 including an information processing apparatus 1710 according to this example embodiment. In this example embodiment, to allow the information processing apparatus 1710 to shape a sample while changing a variety of parameters of laminating and shaping, a laminating and shaping apparatus 1720 needs to be able to change the variety of parameters during a series of shaping processes.

Referring to Fig. 17, a shaping controller 1721 of the laminating and shaping apparatus 1720 changes shaping of a laminating and shaping unit 1722 even during laminating and shaping in response to a variety of parameter change instructions for the information processing apparatus 1710. In the shaping controller 1721, a current value controller, a scan speed controller, a scan line interval controller, a scan line length controller, a powder layer thickness controller, a shaping temperature controller (preheat controller), a beam diameter controller, and the like are prepared. The laminating and shaping unit 1722 also changes process conditions even during laminating and shaping under the control of the shaping controller 1721.

### (Process Map)

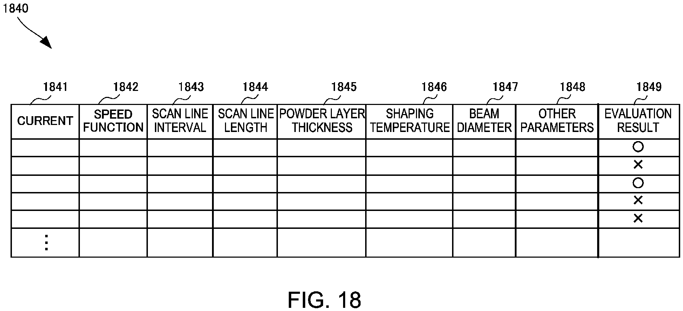

Fig. 18 is a view showing the arrangement of a process map table 1840 according to this example embodiment. The process map table 1840 is used to generate an n-dimensional process map.

The process map table 1840 stores an evaluation result 1849 in association with the dimensions of a current 1841, a speed function 1842, a scan line interval 1843, a scan line length 1844, a powder layer thickness 1845 a shaping temperature 1846, a beam diameter 1847, and other parameters 1848. A process map is generated based on the process map table 1840, and an n-dimensional boundary is determined by machine learning.

According to this example embodiment, it is possible to generate a process window of appropriate conditions while changing not only the current value and the scan speed but also the scan line interval, the scan line length, the powder layer thickness, the shaping temperature, the beam diameter, and the like. Note that the variety of parameters of laminating and shaping are not limited to the parameters described in this example embodiment.

### [Fourth Example Embodiment]

An information processing apparatus according to the fourth example embodiment of the present invention will be described next. The information processing apparatus according to this example embodiment is different from the above-described second and third example embodiments in that after parameter calibration (adjustment) according to this example embodiment, an appropriate parameter set is set automatically without interposing a user setting operation, and a laminating and shaping target object is shaped. The rest of the components and operations is the same as in the second example embodiment. Hence, the same reference numerals denote the same components and operations, and a detailed description thereof will be omitted.

### <<Functional Arrangement of Information Processing Apparatus>>

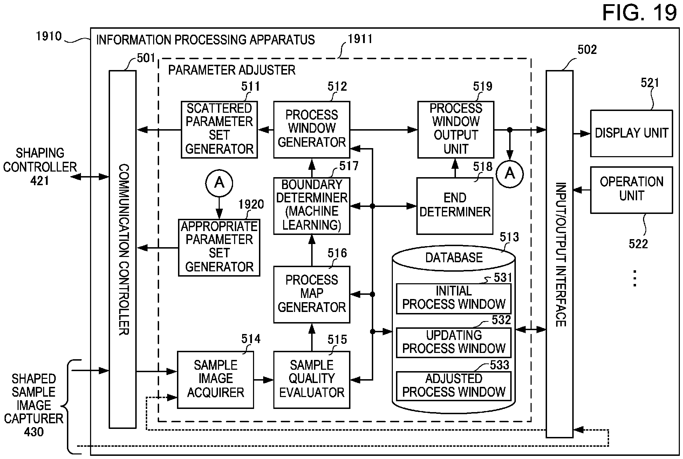

Fig. 19 is a block diagram showing the functional arrangement of an information processing apparatus 1910 according to this example embodiment. Note that the same reference numerals as in Fig. 5 denote the same functional components in Fig. 19, and a repetitive description thereof will be omitted.

A parameter adjuster 2011 of the information processing apparatus 1910 further includes an appropriate parameter set generator 1920 that automatically sets an appropriate parameter set. The appropriate parameter set generator 1920 selects an appropriate parameter set without any influence of external disturbance (far apart from the boundary) based on the output from a process window output unit 519 and a process window in which the region of an appropriate parameter set is clear, and starts laminating and shaping.

According to this example embodiment, it is possible to set appropriate parameters without user setting and automatically shape a laminating and shaping target object of guaranteed quality. Note that the user may set the conditions of parameter sets in advance depending on a laminating and shaping target object and a material and the information processing apparatus may automatically set an appropriate parameter set in consideration of the conditions.

### [Fifth Example Embodiment]

An information processing apparatus according to the fifth example embodiment of the present invention will be described next. The information processing apparatus according to this example embodiment is different from the above-described second to fourth example embodiments in that parameter set adjustment is performed in parallel even during shaping of a laminating and shaping target object. The rest of the components and operations is the same as in the second example embodiment. Hence, the same reference numerals denote the same components and operations, and a detailed description thereof will be omitted.

### <<Functional Arrangement of Information Processing Apparatus>>

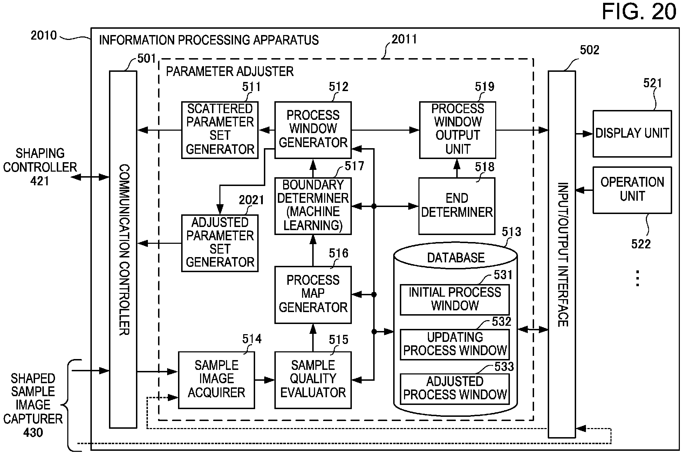

Fig. 20 is a block diagram showing the functional arrangement of an information processing apparatus 2010 according to this example embodiment. Note that the same reference numerals as in Fig. 5 denote the same functional components in Fig. 20, and a repetitive description thereof will be omitted.

A parameter adjuster 2011 of the information processing apparatus 2010 further includes an adjusted parameter set generator 2021 that performs parameter set adjustment in parallel even during shaping of a laminating and shaping target object. The adjusted parameter set generator 2021 acquires an adjusted process window from a process window generator 512, and generates adjusted parameter sets in the process window, thereby further improving a laminating and shaping target object under shaping. Note that, for example, if a parameter set is close to a boundary, the adjusted parameter set generator 2021 performs adjustment such that the parameter set is apart from the boundary. This may be done based on comparison between a threshold and the distance of the parameter set from the boundary. As for the timing of parameter set adjustment, the adjustment may be performed for each layer, for each predetermined number of layers, or for each shaping of a laminating and shaping target object.

According to this example embodiment, even during shaping of a laminating and shaping target object, it is possible to adjust parameters to appropriate parameters and shape a laminating and shaping target object of guaranteed quality.

### [Other Example Embodiments]

In this example embodiment, a support vector machine is used as machine learning. However, even if a boundary is determined by logistic regression, a k-nearest neighbor algorithm, a decision tree, random forest, a neural network, or naive bayes definition, the same effect can be obtained.

Additionally, this example embodiment is not limited to an application to metal laminating and shaping that performs laminating and shaping using metal powder.

Also, in this example embodiment, a powder bed method by electron beam melting has mainly been described. However, the same effect can also be obtained by an application to a laser melting method. Furthermore, the same effect can be obtained by an application to a powder deposition method.

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. An information processing apparatus comprising:
a parameter generator that generates sets of at least two parameters for controlling laminating and shaping such that the sets are scattered in a process window;
a sample shaping instructor that instructs a laminating and shaping unit to perform laminating and shaping of samples using the scattered sets of the at least two parameters;
a sample quality evaluator that acquires an image of the laminated and shaped samples and evaluates qualities of the laminated and shaped samples;
a boundary determiner that determines, in a process map generated by mapping evaluation results of the samples, a boundary of the evaluation results by machine learning; and
a process window generator that repeats parameter generation processing by the parameter generator, sample shaping instruction processing by the sample shaping instructor, quality evaluation processing by the sample quality evaluator, and boundary determination processing by the boundary determiner using a boundary zoon including the determined boundary as a new process window, and generates a process window separated by a finally determined boundary as a process window that guarantees quality of laminating and shaping.

2. The information processing apparatus according to claim 1, wherein the parameter generator uses an initial process window including a range from a maximum value to a minimum value of the at least two parameters settable by the laminating and shaping unit.

3. The information processing apparatus according to claim 1 or 2, wherein the sample shaping instructor laminates and shapes a predetermined number of samples in parallel in the laminating and shaping unit using different sets of the parameters during one sample laminating and shaping cycle, and
further comprising a powder layer generation instructor that instructs generation of a predetermined powder layer that is not to be shaped before laminating and shaping next samples.

4. The information processing apparatus according to any one of claims 1 to 3, wherein the sample quality evaluator comprises:
an image capturing instructor that instructs to capture the laminated and shaped samples by an image capturer; and
an evaluation value assigner that evaluates the qualities of the samples based on images of the samples captured by the image capturer, and assigns evaluation values.

5. The information processing apparatus according to any one of claims 1 to 4, wherein the boundary determiner determines the boundary using the machine learning, one of a support vector machine, logistic regression, a k-nearest neighbor algorithm, a decision tree, random forest, a neural network, and naive bayes definition.

6. The information processing apparatus according to any one of claims 1 to 5, wherein the sets of the at least two parameters are sets of at least two parameters selected from a current value supplied to a heat source corresponding to a heat source output, a scan speed, a scan line interval, a scan line length, a powder layer thickness, a shaping temperature, and a beam diameter.

7. The information processing apparatus according to claim 6, wherein the boundary determiner uses an index of a scan speed known as a relationship between the scan speed and the current value as one of parameters serving as axes of the process map.

8. The information processing apparatus according to any one of claims 1 to 7, wherein when a new boundary cannot be decided anymore by the boundary determiner, or when repeating has been done a predetermined number of cycles, the process window generator ends the repeating.

9. The information processing apparatus according to any one of claims 1 to 8, further comprising:
a presenter that presents information representing a process window that is generated by the process window generator and guarantees the quality of laminating and shaping to a user, as information for supporting setting of a set of the at least two parameters by the user; and
a laminating and shaping instructor that instructs the laminating and shaping unit to laminate and shape a laminating and shaping target object using the set of the at least two parameters set by referring to the information presented by the presenter.

10. The information processing apparatus according to claim 9, wherein the laminating and shaping instructor sets, in the process window that guarantees the quality of laminating and shaping, the set of the at least two parameters apart from the boundary by not less than a predetermined distance.

11. The information processing apparatus according to any one of claims 1 to 10, wherein
the laminating and shaping unit is a metal laminating and shaping unit that performs the laminating and shaping using metal powder,
a shaping method of the metal laminating and shaping unit includes a powder bed method and a powder deposition method, and
the powder bed method includes an electron beam melting method and a laser melting method.

12. A laminating and shaping apparatus comprising:
an information processing apparatus of claim 9 or 10;
a laminating and shaping unit that, before shaping of a laminating and shaping target object, laminates and shapes samples based on a laminating and shaping instruction of the samples by the sample shaping instructor, and then laminates and shapes a laminating and shaping target object based on a laminating and shaping instruction of the laminating and shaping target object by the laminating and shaping instructor; and
an image acquirer that acquires images of the laminated and shaped samples.

13. An information processing method comprising:
generating sets of at least two parameters for controlling laminating and shaping such that the sets are scattered in a process window;
instructing a laminating and shaping unit to perform laminating and shaping of samples using the scattered sets of the at least two parameters;
acquiring images of the laminated and shaped samples and evaluating qualities of the samples;
determining, in a process map generated by mapping evaluation results of the samples, a boundary of the evaluation results by machine learning; and
repeating the generating, the instructing, the acquiring and evaluating, and the determining while using a boundary zoon including the determined boundary as a new process window, and generating a process window separated by a finally determined boundary as a process window that guarantees quality of laminating and shaping.

14. An information processing program for causing a computer to execute a method comprising:
generating sets of at least two parameters for controlling laminating and shaping such that the sets are scattered in a process window;
instructing a laminating and shaping unit to perform laminating and shaping of samples using the scattered sets of the at least two parameters;
acquiring images of the laminated and shaped samples and evaluating qualities of the samples;
determining, in a process map generated by mapping evaluation results of the samples, a boundary of the evaluation results by machine learning; and
repeating the generating, the instructing, the acquiring and evaluating, and the determining while using a boundary region including the determined boundary as a new process window, and generating a process window separated by a finally determined boundary as a process window that guarantees quality of laminating and shaping.

15. A process window generation method comprising:
performing laminating and shaping of samples using sets of at least two parameters for controlling laminating and shaping, which are scattered in a process window;
determining, in a process map generated by mapping evaluation results obtained by evaluating the laminated and shaped samples, a boundary of the evaluation results by machine learning; and
repeating the performing laminating and shaping and the determining while using a boundary region including the determined boundary as a new process window, and generating a process window separated by a finally determined boundary as a process window that guarantees quality of laminating and shaping.
